# FASCICULE DE BREVET EUROPEEN

(11) **EP 2 978 713 B1**
(45) Date de publication et mention de la délivrance du brevet: **05.09.2018**
(21) Numéro de dépôt: 14714260.8
(22) Date de dépôt: 28.03.2014
(51) Int. Cl.: A45D 19/10, A45D 44/02, C02F 9/00, C02F 1/00, C02F 103/00, C02F 103/30, C02F 101/30, C02F 103/02, C02F 1/24, C02F 1/20, C02F 1/78, C02F 1/60, C02F 1/28

(54) **SYSTÈME DE TRAITEMENT D'UNE EAU USÉE CONTENANT AU MOINS UN PRODUIT COSMÉTIQUE, AGENCEMENT ET PROCÉDÉ ASSOCIÉS**
SYSTEM ZUR BEHANDLUNG VON ABWASSER MIT MINDESTENS EINEM KOSMETISCHEN PRODUKT UND ENTSPRECHENDE ANORDNUNG UND VERFAHREN
SYSTEM FOR TREATING WASTE WATER CONTAINING AT LEAST ONE COSMETIC PRODUCT, AND RELATED ARRANGEMENT AND METHOD

(30) Priorité: 29.03.2013 FR 1352921
(43) Date de publication de la demande: 03.02.2016
(73) Titulaire: L'Oréal, 75008 Paris (FR)
(72) Inventeur: NICOLAS, Alexandre, Tokyo 107-0052 (JP); HADJUR, Christophe, 93601 Aulnay-sous-Bois (FR)
(74) Mandataire: Lavoix
(86) Numéro de dépôt international: PCT/EP2014/056352
(87) Numéro de publication internationale: WO 2014/154889

(56) Documents cités:
- WO-A1-2011/160185
- WO-A2-2007/098475
- DE-A1- 3 740 831
- DE-A1- 19 958 621

## Description

La présente invention concerne un système de traitement d'une eau usée contenant au moins un produit cosmétique, le système étant propre à être placé dans un espace d'application de produit cosmétique sur un utilisateur.

Un tel système est destiné notamment à être raccordé à un réceptacle de collecte d'eaux usées présent dans l'espace d'application de produit cosmétique, afin de traiter directement dans cet espace, les eaux usées qui sont engendrées lors d'un traitement cosmétique effectué sur un utilisateur.

L'espace d'application de produit cosmétique est par exemple un salon de coiffure, un institut de beauté, une installation de spa ou de thalassothérapie. En variante, l'espace d'application est situé dans une habitation, par exemple au domicile de l'utilisateur.

Par « produit cosmétique », on entend notamment au sens de la présente invention, un produit tel que défini dans le Règlement CE n°1223/2009 du Parlement Européen et du Conseil, daté du 30 novembre 2009, relatif aux produits cosmétiques.

Le produit cosmétique est par exemple un liquide, un gel, une crème, une émulsion appliquée sur une surface corporelle d'un utilisateur, notamment sur une surface kératinique telle que la peau et les cheveux.

Le produit cosmétique est avantageusement rincé par de l'eau de rinçage, pour être en partie retiré de la surface corporelle. En particulier, le produit cosmétique est un shampooing appliqué sur les cheveux d'un utilisateur, le shampooing étant ensuite rincé par une eau de rinçage. En variante, le produit est un savon appliqué sur la peau de l'utilisateur et rincé par une eau de rinçage.

Le rinçage d'un produit cosmétique tel que du shampooing ou du savon engendre une quantité non négligeable d'eau usée contenant du produit cosmétique. Cette eau usée est généralement collectée dans un réceptacle ouvert de collecte, tel qu'un évier ou un lavabo. La quantité d'eau usée est par exemple de 7 litres à 25 litres dans le cas d'un rinçage de shampooing.

Dans la plupart des pays industrialisés, l'eau usée ainsi collectée est envoyée dans une usine de traitement d'eau à travers un circuit d'égouts, pour y être purifiée, avant d'être rejetée dans la nature ou d'être réutilisée.

Cependant, dans certaines régions, les eaux usées ne sont que partiellement collectées, voire ne sont pas du tout collectées. Dans certains cas, les capacités industrielles de traitement d'eau peuvent être très limitées, soit de manière temporaire, par exemple dans le cas d'un orage, soit de manière permanente, en raison d'un manque de capacité de traitement.

L'eau usée contient généralement des tensioactifs, et dans certains cas, des conservateurs, des impuretés, des silicones, etc.... La plupart de ces composés sont biodégradables, mais peuvent néanmoins avoir un impact sur l'environnement.

Pour diminuer l'impact environnemental des produits cosmétiques, il est connu de favoriser leur biodégradabilité, ou de prévoir des formules qui peuvent être rincées avec une quantité moindre d'eau de rinçage.

Toutefois, ces solutions sont coûteuses et ne sont pas adaptées dans les régions partiellement ou totalement dépourvues d'installations industrielles de traitement des eaux.

WO 2011/026197 décrit un système de purification d'eau pour un navire, dans lequel un agent floculant et coagulant est injecté dans l'eau usée. Un tel système présente donc un impact environnemental. De plus, le système de gestion du floculant et du coagulant est complexe, encombrant et difficile à mettre en oeuvre.. WO 2006/131743, WO 2011/137490, et WO 2012/061905 décrivent des systèmes de traitement d'eau.

Les documents DE 199 58621, WO 2011/160185 et DE 37 40 831 décrivent des systèmes de traitement d'eau dans lesquels des bulles d'air sont injectées dans l'eau usée.

Le document WO 2007/098475 décrit enfin une solution de traitement d'eau usée par ajout de colloïdes d'argent pour éliminer des bactéries.

Un but de l'invention est donc de fournir un système de traitement d'une eau usée contenant au moins un produit cosmétique, le système pouvant être utilisé de manière simple et peu coûteuse dans le cas où une capacité industrielle de traitement des eaux n'est pas disponible, ou est disponible partiellement.

À cet effet, l'invention a pour objet un système selon la revendication 1.

Le système selon l'invention peut comprendre une ou plusieurs des caractéristiques selon les revendications 2 à 6, prise(s) isolément ou suivant toute combinaison techniquement possible.

L'invention a également pour objet un agencement d'application de produit cosmétique sur un utilisateur, selon la revendication 7.

L'agencement selon l'invention peut comprendre une ou plusieurs des caractéristiques selon les revendications 8 à 9, prise(s) isolément ou suivant toute combinaison techniquement possible.

L'invention a aussi pour objet un procédé de traitement d'une eau usée contenant au moins un produit cosmétique, selon la revendication 10.

Le procédé selon l'invention peut comprendre une ou plusieurs des caractéristiques selon les revendications 11 à 12, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est une vue schématique partielle en perspective d'un premier agencement d'application de produit cosmétique, muni d'un système de traitement des eaux usées selon l'invention ;
- la figure 2 est un schéma synoptique illustrant les différents composants du système de traitement de la figure 1 ;
- la figure 3 est une vue schématique agrandie d'un bac de rétention et de séparation du système de la figure 2, dans lequel le principe de séparation des eaux usées est illustré ;
- la figure 4 est une vue arrière en perspective d'un deuxième agencement d'application de produit cosmétique selon l'invention.

Dans tout ce qui suit, les termes « amont » et « aval » s'entendent généralement par rapport au sens normal de circulation d'un fluide.

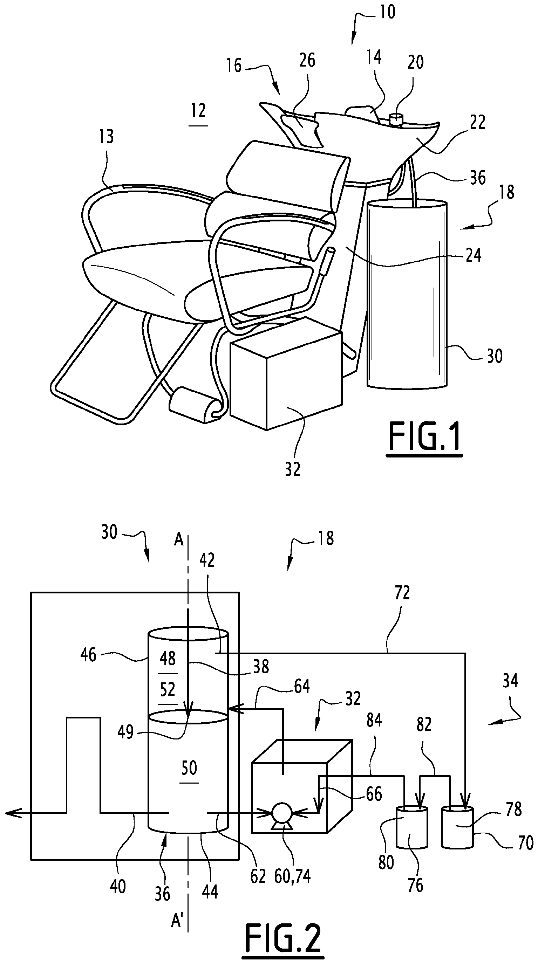

Un premier agencement 10 selon l'invention, destiné à l'application de produit cosmétique sur un utilisateur, est illustré par la figure 1.

L'agencement 10 est placé dans un espace 12 d'application de produit cosmétique. Il est configuré pour l'application du produit cosmétique sur une surface corporelle d'un utilisateur, suivie d'un rinçage au moins partiel du produit cosmétique par une eau de rinçage.

L'espace d'application 12 de produit cosmétique est par exemple un salon de coiffure, un institut de beauté, une installation de spa ou de thalassothérapie. En variante, l'espace d'application 12 est situé dans une habitation, par exemple au domicile de l'utilisateur.

Le produit cosmétique est notamment un liquide, un gel, une crème, une émulsion appliquée sur une surface corporelle d'un utilisateur, notamment sur une surface kératinique telle que la peau et les cheveux.

Le produit cosmétique est propre à être rincé par de l'eau de rinçage, pour être en partie retiré de la surface corporelle. En particulier, le produit cosmétique est un shampooing appliqué sur les cheveux d'un utilisateur, le shampooing étant ensuite rincé par une eau de rinçage.

En variante, le produit cosmétique est un savon appliqué sur la peau d'un utilisateur, le savon étant ensuite rincé par une eau de rinçage.

En référence à la figure 1, l'agencement 10 comporte de préférence un siège 13 propre à recevoir l'utilisateur. Il comporte une source 14 d'eau de rinçage, propre à être distribuée sur une surface corporelle d'un utilisateur portant du produit cosmétique, et un réceptacle ouvert 16, destiné à recueillir une eau usée formée par l'eau de rinçage contenant le produit cosmétique.

L'agencement 10 comporte en outre un système 18 de traitement de l'eau usée, illustré plus en détail sur la figure 2.

La source 14 d'eau de rinçage comporte un organe 20 de distribution d'eau de rinçage, par exemple un robinet et/ou une douche.

Le réceptacle ouvert 16 comporte un bac de collecte 22 ouvert vers le haut, et un support 24.

Le bac de collecte 22 est monté sur le support 24 pour être disposé en regard de la tête d'un utilisateur lorsque l'utilisateur est assis sur le siège 13. Ici, le bac de collecte 22 délimite une encoche 26 de passage du cou de l'utilisateur, placée en regard du dossier du siège 13.

Dans cet exemple, le système de traitement 18 est placé au voisinage du réceptacle 16 et/ou du siège 13, avantageusement au contact du réceptacle 16 et/ou du siège 13.

Le système de traitement 18 comporte un ensemble 30 de réception et de séparation de l'eau usée, un générateur de bulles 32 dans l'eau usée, afin de former une eau traitée et un surnageant, et un ensemble 34 de collecte du surnageant.

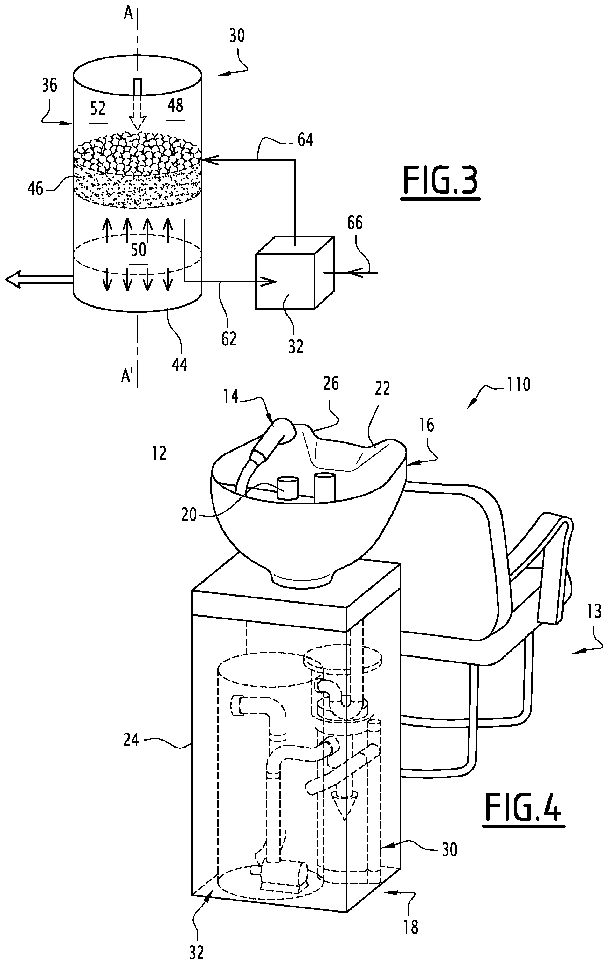

En référence à la figure 2 et à la figure 3, l'ensemble 30 de réception et de séparation comprend un bac 36 de rétention et de séparation des eaux usées, et une entrée 38 d'amenée d'eau usée dans le bac de rétention 36.

L'ensemble 30 comporte en outre une sortie inférieure 40 de récupération d'eau traitée et une sortie supérieure 42 d'évacuation du surnageant.

Le bac de rétention 36 est disposé au voisinage et/ou au contact du réceptacle 16 de collecte de l'eau usée.

Le bac 36 comporte un fond 44 et une paroi latérale 46 délimitant un espace intérieur 48 de réception des eaux usées.

Le fond 44 et de préférence l'espace intérieur 48 sont situés à une hauteur inférieure à celle du fond du bac de collecte 22, pour permettre un écoulement par gravité de l'eau usée contenue dans le bac de collecte 22 vers le bac de rétention 36.

Dans cet exemple, le bac 36 est allongé suivant un axe A-A' vertical. Il présente avantageusement un contour circulaire ou polygonal pour s'adapter à l'espace disponible au voisinage du réceptacle 16.

L'espace intérieur 48 présente un volume avantageusement inférieur à 100 litres, de préférence inférieure à 70 litres, notamment compris entre 10 litres et 60 litres.

L'entrée d'amenée d'eau 38 est formée par un conduit raccordé au bac de collecte 32. Elle débouche en amont directement dans le bac de collecte 32.

L'entrée d'amenée d'eau 38 fait saillie dans le bac 36 de rétention et de séparation. Elle débouche en aval dans l'espace intérieur 48, par une ouverture aval 49, située avantageusement à une hauteur comprise entre 30 % et 70 % de la hauteur de l'espace intérieur 48, en particulier sensiblement à mi-hauteur de l'espace intérieur 48.

Comme on le verra plus bas, ceci permet d'accommoder un volume de surnageant suffisant dans l'espace intérieur 48.

Selon l'invention, le système 18 est dépourvu de moyens d'injection d'un composé coagulant et/ou floculant, en particulier sur l'entrée d'amenée d'eau 38, entre le bac ouvert 22 de collecte d'eau usée et l'espace intérieur 48 du bac de rétention 36.

Ainsi, l'eau usée collectée dans le bac ouvert 22 chemine directement et sans traitement de floculation et/ou de coagulation jusqu'à l'espace intérieur 48 du bac de rétention 36 à travers l'entrée d'amenée d'eau 38.

Ceci diminue notablement l'impact environnemental du système 18.

La sortie inférieure 40 de récupération est piquée sur le bac 36, en dessous de l'ouverture aval 49 de l'entrée d'amenée 38. La sortie inférieure est disposée avantageusement à travers la paroi latérale 46, au voisinage du fond 44 ou dans le fond 44. Elle débouche en amont dans une région inférieure 50 de l'espace intérieur 48, destinée à recevoir une eau traitée.

La sortie supérieure 42 d'évacuation est piquée sur le bac 46, au-dessus de l'ouverture aval 49 de l'entrée d'amenée 38. Elle est disposée avantageusement au voisinage de son bord supérieur, à travers la paroi latérale 46, Elle débouche en amont dans une région supérieure 52 de l'espace intérieur 48 destinée à recevoir un surnageant.

Le générateur de bulles 32 est propre à former une grande quantité de bulles d'air dans l'eau usée, afin de créer une interface air-eau significative, pour collecter à cette interface les tensioactifs et/ou les composés hydrophobes et/ou les impuretés présents dans l'eau usée.

Ceci purifie l'eau usée, engendrant une eau traitée, relativement dépourvue de tensioactifs et/ou de composés hydrophobes et/ou d'impuretés, et un surnageant mousseux, relativement riche en tensioactifs et/ou en composés hydrophobes et/ou en impuretés.

De préférence, le générateur de bulles 32 est propre à créer des micros-bulles, c'est-à-dire des bulles présentant une dimension moyenne inférieure à 0,5 mm. La taille des bulles est mesurée par exemple par échographie de contraste .

À cet effet, le générateur de bulles 32 comporte une pompe à eau 60, une conduite amont 62 de prélèvement d'eau relativement dépourvue de bulles dans le bac de rétention 36, et une conduite aval 64 d'injection d'eau relativement riche en bulles dans le bac de rétention 36.

Le générateur de bulles 32 comporte en outre une entrée d'air 66 raccordée à la pompe à eau 60.

La pompe à eau 60 est par exemple du type à pompe à palettes où le fluide circule grâce à la rotation autour d'un axe de palettes dans une chambre avantageusement circulaire.

La pompe à eau 60 est propre à injecter une quantité de bulles d'air dans l'eau relativement dépourvue de bulles provenant de la conduit amont 62, à partir de l'air collecté à travers l'entrée d'air 66, pour former l'eau relativement riche en bulles refoulée dans la conduite aval 64.

Par « relativement dépourvue de bulles », on entend que le volume d'air présent dans l'eau relativement dépourvue de bulles est de préférence inférieur à 15 % du volume d'eau présent dans l'eau relativement dépourvue de bulles.

Par « relativement riche en bulles », on entend que le volume d'air présent dans l'eau relativement riche en bulles est de préférence supérieur à 15 % du volume d'eau présent dans l'eau relativement riche en bulles.

La conduite amont 62 débouche en amont dans la région inférieure 50 de l'espace intérieur 48, au voisinage du fond 44 ou dans le fond 44. Elle débouche en aval dans une entrée d'admission de la pompe 60.

La conduite aval 64 débouche en amont dans une sortie de refoulement de la pompe 60. Elle débouche en aval dans l'espace intérieur 48, avantageusement dans la région supérieure 52, au voisinage de l'ouverture aval 49 de l'entrée d'amenée 38. Une douche (non représentée) peut être placée à l'extrémité aval de la conduite aval 64 dans l'espace intérieur 48.

L'ensemble de collecte 34 du surnageant comporte un piège de collecte 70, et une conduite 72 d'évacuation du surnageant, raccordant la sortie supérieure 42 au piège de collecte 70.

L'ensemble de collecte 34 comprend en outre une source 74 de mise en dépression du piège de collecte 70 et avantageusement, un réceptacle intermédiaire 76 de protection de la source 74.

Le piège de collecte 70 est destiné à traiter le surnageant mousseux pour réduire son volume et former un résidu liquide. Il présente avantageusement un espace intérieur 78 de volume inférieur au volume de l'espace intérieur 48 du bac de rétention et de séparation 36. Ce volume est par exemple compris entre 1 litre et 2 litres.

L'espace intérieur 78 du piège de collecte 70 est propre à être soumis à une pression inférieure à la pression qui règne dans l'espace intérieur 48 du bac de rétention et de séparation 36, par l'intermédiaire de la source 74 de mise en dépression.

La différence de pression entre l'espace intérieur 78 et l'espace intérieur 48 est engendrée par un débit d'aspiration d'air avantageusement supérieur à 1NL/min.

La conduite d'évacuation 72 est raccordée en amont à la sortie supérieure 42. Elle débouche en aval dans l'espace intérieur 78.

Dans cet exemple, la source 74 de mise en dépression est formée par la pompe 60. À cet effet, l'espace intérieur 78 est raccordé à l'entrée d'air 66, provoquant une aspiration d'air dans l'espace intérieur 78 lorsque la pompe 60 fonctionne.

Lorsqu'il est présent, le réceptacle intermédiaire 76 est interposé entre l'entrée d'air 66 et l'espace intérieur 78. Il délimite un volume intérieur 80 d'élimination de liquide raccordé en amont à l'espace intérieur 78 par un piquage amont 82 et en aval à l'entrée d'air 66 par un piquage aval 84.

Ainsi, un éventuel liquide prélevé dans le piège de collecte 70 est collecté dans le volume intérieur 80, ce qui l'empêche d'être introduit dans l'entrée d'air 66 de la pompe 60.

Le fonctionnement de l'agencement 10 et du système de traitement 18 vont maintenant être décrit.

Initialement, le produit cosmétique préalablement appliqué sur l'utilisateur est rincé au moins partiellement à l'aide de la source 14 d'eau de rinçage. Il forme, avec l'eau de rinçage, une eau usée collectée dans le bac de collecte 22.

L'eau usée s'écoule, avantageusement par gravité, depuis le bac de collecte 22 vers le bac de rétention 36 à travers l'entrée amont 38. L'eau usée s'accumule dans la région inférieure 50 de l'espace intérieur 48. Aucun produit de floculation et/ou coagulation n'est injecté dans l'eau usée collectée dans le bac de collecte 22.

Lorsque le traitement de l'eau usée doit être effectué, le générateur de bulles 32 est activé. De l'eau relativement pauvre en bulles est prélevée dans la région inférieure 50 de l'espace intérieur 48 à travers la conduite amont 62.

L'eau relativement dépourvue en bulles est ensuite pompée dans la pompe à eau 60 et reçoit de l'air provenant de l'entrée d'air 66. Cet air est injecté sous forme de bulles, avantageusement de micro-bulles, formant ainsi une eau relativement riche en bulles.

L'eau relativement riche en bulles est ensuite réinjectée dans l'espace intérieur 48 à travers la conduite aval 64.

Une interface air-eau maximale est alors engendrée. Les tensioactifs, les composés hydrophobes, et certaines impuretés se collectent spontanément à l'interface air-eau, et remontent par gravité sous forme de mousse vers la région supérieure 52.

Ainsi, une eau purifiée, sensiblement dépourvue de bulles et relativement pauvre en tensioactifs, et/ou en composés hydrophobes et/ou en impuretés est formée dans la région inférieure 50.

L'eau purifiée peut être récupérée à travers la sortie intérieure 40, avantageusement pour être réutilisée dans l'espace 12 d'application de produit cosmétique.

Un surnageant mousseux est formé dans la région supérieure 52, le surnageant étant relativement riche en tensioactifs, et/ou en composés hydrophobes et/ou en impuretés.

La séparation effectuée dans le bac de rétention 36 ne nécessite pas non plus d'utiliser des composés floculants et/ou coagulants.

Sous l'effet de l'aspiration d'air de la pompe 60 formant la source 74 de mise en dépression, une pression inférieure à la pression qui règne dans l'espace intérieur 48 est engendrée dans l'espace intérieur 78 du piège de collecte 70.

Le surnageant mousseux est donc aspiré à travers la sortie supérieure 42, puis à travers la conduite d'évacuation 72, pour être collecté dans le piège 70.

Sous l'effet de la basse pression régnant dans l'espace intérieur 78 du piège 70, la mousse se défait et forme un liquide contenant les tensioactifs, et/ou les composés hydrophobes, et/ou d'autres impuretés.

Aucun composé floculant et/ou coagulant n'est utilisé non plus pour traiter le surnageant.

Selon l'invention, la simple application de vide sur le surnageant mousseux permet de le traiter efficacement en réduisant son volume, pour collecter un liquide concentré de faible volume.

Ce liquide concentré peut alors être évacué périodiquement et traité hors de l'espace d'application 12.

Le système de traitement 18 selon l'invention est donc particulièrement efficace et compact. Il ne nécessite pas d'utiliser des composés floculants et/ou coagulants, et présente donc un impact environnemental minimal, tout en offrant un traitement très efficace et rapide des eaux usées.

Dans le deuxième agencement 110 selon l'invention, l'ensemble de récupération et de séparation 30, ainsi que le générateur de bulles 32 sont reçus dans le support 24, sous le bac de collecte 22. L'agencement 110 est donc particulièrement compact.

Le système de traitement 18 de l'agencement 110 est par ailleurs analogue au système de traitement 18 de l'agencement 10 et fonctionne de la même manière.

Dans les exemples représenté sur les figures 1 et 4, un système de traitement 18 est associé à chaque agencement 10, 110. En variante, un système de traitement 18 peut être commun à plusieurs agencements 10, 110.

Dans une variante, un filtre, notamment un filtre au carbone activé, par exemple sous forme d'une cartouche, est interposé sur la sortie 40 afin de finaliser le traitement. Une pompe peut alors être ajoutée pour compenser les pertes de charges.

Ce filtre collecte les impuretés présentes dans l'eau, même après son traitement.

Par ailleurs on peut ajouter un pré-filtre sur la conduite aval 64 pour assurer la longévité de pompe et éviter toute dégradation.

Dans une autre variante, un injecteur d'un gaz de traitement, tel que de l'ozone, est disposé au niveau de l'entrée d'air 66, afin d'aseptiser l'eau traitée, en évitant une contamination microbienne.

## Revendications

1. Système (18) de traitement d'une eau usée contenant au moins un produit cosmétique, le système (18) étant propre à être placé dans un espace (12) d'application de produit cosmétique sur un utilisateur, le système (18) comprenant :
- un bac (36) de rétention et de séparation de l'eau usée ;
- une entrée (38) d'amenée d'eau usée non traitée dans le bac de rétention (36) ;
- un générateur de bulles (32), propre à introduire une quantité de bulles dans l'eau usée du bac de rétention (36), pour former, dans une région inférieure (50) du bac de rétention (36), une eau traitée et, dans une région supérieure (52) du bac de rétention (36), un surnageant, le générateur de bulles (32) comportant une conduite amont (62) de prélèvement d'une eau relativement dépourvue de bulles dans le bac de rétention (36), et une conduite aval (64) d'injection d'une eau relativement riche en bulles dans le bac de rétention (36) ;
- une sortie inférieure (40) de récupération d'une eau traitée hors du bac de rétention (36) ;
- une sortie supérieure (42) d'évacuation d'un surnageant mousseux hors du bac de rétention (36) ;
- le système (18) étant dépourvu de moyens d'injection d'un composé de floculation et/ou de coagulation de l'eau usée, au moins en amont du bac de rétention (36)
- un piège (70) de collecte du surnageant mousseux ;
le piège de collecte (70) étant raccordé à la sortie supérieure (42) d'évacuation et étant connecté à une source (74) de mise en dépression, propre à engendrer une pression dans le piège de collecte (70) inférieure à la pression qui règne dans le bac de rétention (36), le générateur de bulles (32) comportant la source de mise en dépression (74).

2. Système (18) selon la revendication 1, dans lequel le générateur de bulles (32) comprend une entrée d'air (66) et une pompe à eau (60), propre à mélanger de l'air prélevé par l'entrée d'air (66) à l'eau relativement dépourvue de bulles issue de la conduite amont (62), pour former l'eau relativement riche en bulles destinée à être convoyée par la conduite aval (64).

3. Système (18) selon la revendication 2, dans lequel la source de mise en dépression (74) est formée par la pompe à eau (60), l'entrée d'air (66) étant raccordée au piège de collecte (70).

4. Système (18) selon l'une quelconque des revendications précédentes, comportant un réceptacle intermédiaire (76) de protection, interposé entre le piège de collecte (70) et la source de mise en dépression (74).

5. Système (18) selon l'une quelconque des revendications précédentes, dans lequel le volume intérieur du bac de rétention (36) est inférieur à 100 litres.

6. Système (18) selon l'une quelconque des revendications précédentes, dans lequel le générateur de bulles (32) est propre à engendrer des bulles de taille moyenne inférieure à 0,5 mm.

7. Agencement (10 ; 110) d'application de produit cosmétique sur un utilisateur, comportant :
- une source (14) d'eau de rinçage du produit cosmétique
- un réceptacle ouvert (16) de collecte d'une eau usée formée à partir de l'eau de rinçage et contenant du produit cosmétique ;
- optionnellement un siège (13), propre à recevoir un utilisateur ;
- un système (18) selon l'une quelconque des revendications précédentes, l'entrée d'amenée (38) étant raccordée au réceptacle ouvert (16).

8. Agencement (10 ; 110) selon la revendication 7, dans lequel un fond du réceptacle ouvert (16) est disposé à une hauteur supérieure à un fond (44) du bac de rétention (36) pour permettre l'écoulement par gravité de l'eau usée collectée dans le réceptacle ouvert (16) vers le bac de rétention (36).

9. Agencement (10 ; 110) selon l'une quelconque des revendications 7 ou 8, comportant un siège (13), propre à recevoir un utilisateur, le siège (13) étant placé au voisinage du réceptacle ouvert (16) et/ou du système de traitement d'eaux usées (18), le réceptacle ouvert (16) comportant un bac de collecte (22) ouvert vers le haut, et un support (24), le bac de collecte (22) étant monté sur le support (24) pour être disposé en regard de la tête d'un utilisateur lorsque l'utilisateur est assis sur le siège (13).

10. Procédé de traitement d'une eau usée contenant au moins un produit cosmétique, comportant les étapes suivantes :
- fourniture, dans un espace (12) d'application de produit cosmétique sur un utilisateur, d'un système (18) selon l'une quelconque des revendications 1 à 6 ;
- amenée d'eau usée contenant au moins un produit cosmétique dans le bac de rétention (36) à travers l'entrée d'amenée (38) ;
- introduction d'une quantité de bulles d'air dans l'eau usée, par l'intermédiaire du générateur de bulles (32) ;
- formation d'une eau traitée dans une région inférieure (50) du bac de rétention (36) et d'un surnageant dans une région supérieure (52) du bac de rétention (36) ;
- récupération d'une eau traitée par la sortie inférieure (40) de prélèvement ;
- évacuation du surnageant par la sortie supérieure (42) d'évacuation ;
le procédé étant dépourvu d'étape d'injection d'un composé de floculation et/ou de coagulation de l'eau usée, au moins en amont de son passage dans le bac de rétention (36).

11. Procédé selon la revendication 10, comportant une étape de collecte du surnageant dans un piège (70) de collecte raccordé à la sortie supérieure (42) d'évacuation, l'étape de collecte comportant l'application d'une pression dans le piège de collecte (70) inférieure à la pression régnant dans le bac de rétention (36) par une source de dépression (74).

12. Procédé selon la revendication 11, dans laquelle l'étape d'introduction d'une quantité de bulles dans l'eau usée comporte le prélèvement d'une eau relativement dépourvue de bulles dans le bac de rétention (36), et l'introduction de l'eau relativement dépourvue de bulles dans une pompe à eau (60), une entrée d'air (66) de la pompe à eau (60) étant raccordée au piège de collecte (70), de l'air étant prélevé dans le piège de collecte (70) afin de diminuer la pression dans le piège de collecte (70), l'air prélevé dans le piège de collecte (70) étant injecté dans l'eau relativement dépourvue de bulles à travers l'entrée d'air (66) pour former une eau relativement riche en bulles.

## Patentansprüche

1. System (18) zur Behandlung eines Abwassers, das mindestens ein Kosmetikprodukt enthält, wobei das System (18) geeignet ist, in einem Raum (12) der Anwendung des Kosmetikproduktes an einem Benutzer platziert zu werden, wobei das System (18) umfasst:
- einen Behälter (36) zum Auffangen und Trennen des Abwassers;
- einen Einlass (38) zum Zuführen von nichtbehandelten Abwasser in den Auffangbehälter (36);
- einen Generator (32) für Gasblasen, der geeignet ist, eine Menge von Gasblasen in das Abwasser des Auffangbehälters (36) einzuführen, um in dem unteren Bereich (50) des Auffangbehälters (36) ein behandeltes Wasser und in dem oberen Bereich (52) des Auffangbehälters (36) einen Überstand zu bilden, wobei der Gasblasengenerator (32) einen stromaufwärtsgelegenen Kanal (62) zum Entnehmen von Wasser, das relativ frei von Gasblasen in dem Auffangbehälter (36) ist, und einen stromabwärtsgelegenen Kanal (64) des Einspritzens von Wasser relativ reich an Gasblasen in den Auffangbehälter (36) aufweist,
- einen unteren Auslass (40) aus dem Auffangbehälter (36) zum Gewinnen eines behandelten Wassers heraus;
- einen oberen Auslass (42) aus dem Auffangbehälter (36) heraus zum Austragen eines Schaumüberstandes;
- wobei das System (18) frei von Mitteln zum Einspritzen einer Ausflockungs- und/oder Koagulationszusammensetzung des Abwassers mindestens stromaufwärts zu dem Auffangbecken (36) ist,
- eine Falle (70) zum Sammeln des Schaumüberstandes;
wobei die Sammelfalle (70) an den oberen Austragauslass (42) angeschlossen ist und mit einer Unterdruckquelle (74) verbunden ist, die geeignet ist, einen Druck in der Sammelfalle (70) kleiner als der Druck, der in dem Auffangbehälter (36) herrscht, zu erzeugen, wobei der Gasblasengenerator (32) die Unterdruckquelle (74) aufweist.

2. System (18) nach Anspruch 1, bei dem der Gasblasengenerator (32) einen Lufteintritt (66) und eine Wasserpumpe (60) aufweist, die geeignet ist, von dem Lufteintritt (66) entnommene Luft mit dem Wasser, das relativ frei von Gasblasen ist, aus dem stromaufwärtsgelegenen Kanal (62), zu mischen, um Wasser relativ reich an Gasblasen zu bilden, das vorgesehen ist, über den stromabwärtsliegenden Kanal (64) geleitet zu werden.

3. System (18) nach Anspruch 2, bei dem die Unterdruckquelle (74) durch die Wasserpumpe (60) gebildet wird, wobei der Lufteintritt (66) an die Sammelfalle (70) angeschlossen ist.

4. System (18) nach einem beliebigen der vorhergehenden Ansprüche, einen Schutzzwischenbehälter (76) aufweisend, der zwischen der Sammelfalle (70) und der Unterdruckquelle (74) angeordnet ist.

5. System (18) nach einem beliebigen der vorhergehenden Ansprüche, bei dem das Innenvolumen des Auffangbehälters (36) kleiner als 100 Liter beträgt.

6. System (18) nach einem beliebigen der vorhergehenden Ansprüche, bei dem der Gasblasengenerator (32) geeignet ist, Blasen mit einer mittleren Größe kleiner als 0,5 mm zu erzeugen.

7. Anordnung (10, 110) zur Anwendung eines Kosmetikproduktes an einem Benutzer, umfassend:
- eine Spülwasserquelle (14) für das Kosmetikprodukt
- einen offenen Behälter (16) zum Sammeln von Abwasser, das aus dem Spülwasser gebildet ist und das Kosmetikprodukt enthält;
- optional einen Sitz (13), der geeignet ist, einen Benutzer aufzunehmen;
- ein System (18) nach einem beliebigen der vorhergehenden Ansprüche, wobei der Zufuhreinlass (38) an den offenen Behälter (16) angeschlossen ist.

8. Anordnung (10, 110) nach Anspruch 7, bei dem ein Boden des offenen Behälters (16) in einer Höhe angeordnet ist, die über einem Boden (44) des Auffangbehälters (36) angeordnet ist, um eine Strömung des in dem offenen Behälter (16) gesammelten Abwassers durch Schwerkraft zu dem Auffangbehälter (36) zu ermöglichen.

9. Anordnung (10, 110) nach einem beliebigen der Ansprüche 7 oder 8, einen Sitz (13) umfassend, der geeignet ist, einen Benutzer aufzunehmen, wobei der Sitz (13) in der Nähe des offenen Behälters (16) und/oder des Systems (18) zum Behandeln von Abwässern platziert ist, wobei der offene Behälter (16) einen nach oben offenen Sammelbehälter (22) und einen Träger (24) aufweist und der Sammelbehälter (22) auf den Träger (24) montiert ist, um gegenüber dem Kopf des Benutzers angeordnet zu sein, wenn der Benutzer auf den Sitz (13) sitzt.

10. Verfahren zum Behandeln eines Abwassers, das mindestens ein Kosmetikprodukt enthält, folgende Schritte umfassen:
- Bereitstellen eines Systems (18) nach einem beliebigen der Ansprüche 1 bis 6 in einem Raum (12) zur Anwendung eines Kosmetikproduktes an einem Benutzer;
- Zuführen von mindestens ein Kosmetikprodukt enthaltendes Abwasser in den Auffangbehälter (36) durch den Zuführeinlass (38) hindurch;
- Einführen einer Menge an Luftblasen in das Abwasser mittels eines Gasblasengenerators (32);
- Bilden eines behandelten Wassers in einem unteren Bereich (50) des Auffangbehälters (36) und eines Überstandes in einem oberen Bereich (52) des Auffangbehälters (36);
- Gewinnen eines behandelten Wassers durch den unteren Entnahmeauslass (40);
- Austragen des Überstandes über den oberen Austragauslass (42);
wobei das Verfahren frei von einem Schritt des Einspritzens einer Ausflockungs- und/oder Koagulationszusammensetzung des Abwassers mindestens stromaufwärts zu seinem Durchgang in den Auffangbehälter (36) ist.

11. Verfahren nach Anspruch 10, einen Schritt des Sammelns des Überstandes in einer Sammelfalle (70), die an den oberen Auslass (42) zum Austragangeschlossen ist, aufweisend, wobei der Schritt des Sammelns die Einbringung eines Drucks in die Sammelfalle (70), der kleiner als der Druck ist, der in dem Auffangbehälter (36) herrscht, durch eine Unterdruckquelle (74) aufweist.

12. Verfahren nach Anspruch 11, bei dem der Schritt des Einführens einer Menge an Gasblasen in das Abwasser die Entnahme eines Wassers in dem Auffangbehälter (36), das relativ frei von Gasblasen ist, und das Einführen des Wassers relativ frei an Gasblasen in eine Wasserpumpe (60) aufweist, wobei ein Lufteintritt (66) der Wasserpumpe (30) an die Sammelfalle (70) angeschlossen ist, Luft in der Sammelfalle (70) entnommen wird, um den Druck in der Sammelfalle (70) zu verringern, wobei die in der Sammelfalle (70) entnommene Luft über den Lufteintritt (66) in das Wasser relativ frei an Gasblasen eingespritzt wird, um ein Wasser zu bilden, das relativ reich an Gasblasen ist.

## Claims

1. System (18) for treating waste water containing at least one cosmetic product, the system (18) being able to be placed in an application space (12) for applying a cosmetic product on a user, the system (18) comprising:
- a tank (36) for holding and separating the waste water;
- an inlet (38) for moving untreated waste water into the holding tank (36);
- a bubble generator (32), able to introduce a quantity of bubbles into the waste water of the holding tank (36), in order to form, in a lower region (50) of the holding tank (36), a treated water and, in an upper region (52) of the holding tank (36), a supernatant, the bubble generator (32) comprising an upstream pipe (62) for sampling a relatively bubble-free water in the holding tank (36), and a downstream pipe (64) for injecting water relatively rich in bubbles into the holding tank (36);
- a lower outlet (40) for recovering treated water from the holding tank (36);
- an upper outlet (42) for discharging a foamy supernatant from the holding tank (36);
- the system (18) being devoid of means for injecting a compound for flocculating and/or coagulating the waste water, at least upstream from the holding tank (36).
- a trap (70) for collecting the foamy supernatant ;
the collection trap (70) being connected to the upper discharge outlet (42), and to a vacuum source (74), able to generate a pressure in the collection trap (70) lower than the pressure prevailing in the holding tank (36), the bubble generator (32) comprising the vacuum source (74).

2. System (18) according to claim 1, wherein the bubble generator (32) comprises an air inlet (66) and a water pump (60), capable of mixing air taken through the air inlet (66) with the relatively bubble-free water coming from the upstream pipe (62) to form the water relatively rich in bubbles to be conveyed by the downstream pipe (64).

3. System (18) according to claim 2, wherein the vacuum source (74) is formed by the water pump (60), with the air inlet (66) being connected to the collection trap (70).

4. System (18) according to any one of the previous claims, comprising an intermediate receptacle (76) for protection, interposed between the collection trap (70) and the vacuum source (74).

5. System (18) according to any one of the previous claims, wherein the inner volume of the holding tank (36) is less than 100 liters.

6. System (18) according to any one of the previous claims, wherein the bubble generator (32) is able to generate bubble of an average size less than 0.5 mm.

7. Arrangement (10; 110) for applying cosmetic product on a user, including:
- a source (14) of rinse water for the cosmetic product
- an open receptacle (16) for collecting waste water formed from the rinse water and containing the cosmetic product;
- optionally a seat (13), able to receive a user;
- a system (18) according to any one of the previous claims, with the inlet (38) connected to the open receptacle (16).

8. Arrangement (10;110) according to claim 7, wherein a bottom of the open receptacle (16) is arranged at a height greater than a bottom (44) of the holding tank (36) in order to allow for the flow via gravity of the waste water collected in the open receptacle (16) to the holding tank (36);

9. Arrangement (10; 110) according to any of claims 7 or 8, comprising a seat (13), able to receive a user, with the seat (13) being placed in the vicinity of the open receptacle (16) and/or of the waste water treatment system (18), the open receptacle (16) comprising a collection tank (22) open upwards, and a support (24), the collection tank (22) is mounted on the support (24) in order to be arranged facing the head of a user when the user is seated on the seat (13).

10. Method for treating waste water containing at least one cosmetic product, comprising the following steps:
- supplying, in an application space (12) of the cosmetic product on a user, a system (18) according to any of claims 1 to 6;
- conveying waste water containing at least one cosmetic product in the holding tank (36) though the inlet (38);
- introducing a quantity of air bubbles into the waste water, through the intermediary of the bubble generator (32);
- forming of treated water in an lower region (50) of the holding tank (36) and of a supernatant in an upper region (52) of the holding tank (36);
- recovering treated water via the lower sampling outlet (40);
- discharging the supernatant by the upper discharge outlet (42);
the method being devoid of a step of injecting a compound for flocculating and/or coagulating the waste water, at least upstream of its passage into the holding tank (36).

11. Method according to claim 10, comprising a step of collecting the supernatant in a collection trap (70) connected to the upper discharge outlet (42), with the step of collecting comprising the application of pressure in the collection trap (70) that is lower than the pressure prevailing in the holding tank (36) by a vacuum source (74).

12. Method according to claim 11, wherein the step of introducing a quantity of bubbles into the waste water comprises the sampling of relatively bubble-free water in the holding tank (36), and the introducing of relatively bubble-free water into a water pump (60), with an air inlet (66) of the water pump (60) being connected to the collection trap (70), with air sampled in the collection trap (70) in order to reduce the pressure in the collection trap (70), with the air sampled in the collection trap (70) being injected into the relatively bubble-free water through the air inlet (66) in order to form relatively bubble-rich water.
